# EUROPÄISCHE PATENTSCHRIFT

(11) **EP 3 541 726 B1**
(45) Veröffentlichungstag und Bekanntmachung des Hinweises auf die Patenterteilung: **17.04.2024**
(21) Anmeldenummer: 18755450.6
(22) Anmeldetag: 14.08.2018
(51) Int. Cl.: B65G 23/08, B65G 39/09

(54) **HYBRIDDECKEL**
HYBRID LID
COUVERCLE HYBRIDE

(30) Priorität: 17.08.2017 DE 102017118817
(43) Veröffentlichungstag der Anmeldung: 25.09.2019
(73) Patentinhaber: Interroll Holding AG, 6592 Sant'Antonino (CH)
(72) Erfinder: SCHUMACHER, Jürgen, 6592 Sant' Antonino (CH)
(74) Vertreter: Kohlhof, Stephan
(86) Internationale Anmeldenummer: PCT/EP2018/071969
(87) Internationale Veröffentlichungsnummer: WO 2019/034629

(56) Entgegenhaltungen:
- WO-A1-97/37913
- DE-A1-102016 112 051
- DE-U1- 29 623 889
- US-A- 4 303 741

## Beschreibung

Die Erfindung betrifft eine motorbetriebene Förderrolle umfassend einen sich entlang einer Rotationslängsachse erstreckenden zylindrischen Rollenkörper, eine koaxial in Bezug auf die Rotationslängsachse zum Rollenkörper ausgerichtete Achseinheit, eine in dem Rollenkörper angeordnete Antriebseinheit, die mit dem Rollenkörper und der Achseinheit gekoppelt ist zu Erzeugung einer Rotationsbewegung zwischen der Achseinheit und dem Rollenkörper um die Rotationslängsachse und einen ersten endseitigen Deckel, welcher den Rollenkörper an einem ersten axialen Ende verschließt und durch den sich ein Achsabschnitt der Achseinheit erstreckt,

Motorbetriebene Förderrollen und Verfahren zu deren Betrieb sind grundsätzlich beispielsweise aus WO 97/37913 A1, EP 1656312B1 und EP 1671901B1 bekannt. Solche motorbetriebenen Förderrollen werden in zahlreichen unterschiedlichen Anwendungen eingesetzt. Ein typischer Anwendungsfall ist der Einsatz in einer Förderstrecke zum Fördern von Gegenständen wie Behältern, Warensendungen, Reisegepäck und dergleichen. In solchen Anwendungen werden motorbetriebene Förderrollen in horizontaler Lage in einem Rahmengestell montiert und die zu fördernden Produkte rollen auf der Außenfläche des Rollenkörpers. Oftmals werden motorbetriebene Förderrollen bei solchen Anwendungen gemeinsam mit Leerlaufrollen, die über keinen eigenen Antrieb verfügen, eingesetzt und die parallel zur motorbetriebenen Förderrolle in dem Rahmengestell montiert sind, um eine Förderstrecke zu bilden. Diese Leerlaufrollen werden durch die motorbetriebene Förderrolle mittels entsprechender Treibriemen angetrieben.

Die Erteilungsbehörde betrachtet die WO 93/37913 A1 als ein Dokument, welches einen Deckel gemäß dem Oberbegriff des Anspruchs 1, eine Förderrolle gemäß dem Oberbegriff des Anspruchs 7 und ein Verfahren zum Herstellen eines Deckels einer motorbetriebenen Förderrolle gemäß dem Oberbegriff des Anspruchs 11 offenbart.

Eine grundsätzliche Anforderung an motorbetriebene Förderrollen gerade in solchen Anwendungen ist die Bereitstellung eines hohen Drehmoments zur verzögerungsfreien Förderung und Abbremsung auch schwergewichtiger Gegenstände. Aus diesem Grund haben sich motorbetriebene Förderrollen bewährt, die über einen elektronisch kommutierten Drehstrommotor verfügen. Dieser Drehstrommotor ist Platz sparend innerhalb des Rollenkörpers angeordnet und wird typischerweise mittels einer Versorgungsleitung mit Strom versorgt, die durch ein hohl ausgeführtes Achselement der motorbetriebenen Förderrolle hindurchgeführt wird.

Es ist angestrebt, motorbetriebene Förderrollen weitestgehend solcherart zu kapseln, dass ein Eindringen von Flüssigkeiten, beispielsweise im Zuge einer Reinigung der Förderanlage, zuverlässig vermieden wird, ebenso ein Austreten von Schmiermittel aus der Förderrolle in die Umgebung. Nachteilig an dieser Art der Kapselung ist jedoch, dass gerade bei hohen Betriebslasten eine starke Wärmeentwicklung innerhalb des Rollenkörpers durch den darin angeordneten elektrischen Motor auftritt und die erzeugte Wärme durch die Kapselung nicht in ausreichendem Maße abgeführt werden kann. Die höchstzulässige Dauerlast solcher motorbetriebenen Förderrollen ist daher oftmals durch eine Maximaltemperatur begrenzt, die für das temperaturempfindlichste Bauteil innerhalb des Rollenkörpers nicht überschritten werden darf.

Um Produkte wie Behälter, Pakete, Gebäckstücke oder Paletten mit unterschiedlicher und auch kurzer Länge in Förderrichtung gleichmäßig und mit Auflage auf jederzeit zumindest zwei, vorzugsweise drei Förderrollen fördern zu können, werden Förderstrecken, auf denen die Produkte direkt auf den Rollenkörpern aufliegen, aus Förderrollen mit einem Durchmesser von etwa 50 mm aufgebaut. Dies ermöglicht eine enge Aneinanderreihung von Förderrollen, von denen nur einzelne als motorbetriebene Förderrolle ausgebildet sein müssen, welche dann gegebenenfalls über ein Zugmittelgetriebe wie beispielsweise einen Keilrippenriemen andere Förderrollen antreiben können. In motobetriebene Förderrollen für diesen Einsatzzweck und mit dieser Abmessung kommen Antriebe zum Einsatz, die eine Leistung aufweisen und sich durch eine kompakte Bauform mit einem Planetenradgetriebe auszeichnen.

Eine demgegenüber andere Ausgestaltung stellen Trommelmotoren dar, die einen Durchmesser von mehr als 100 mm aufweisen und in der Regel als Antriebseinheit für einen Bandförderer eingesetzt werden. Bei solchen Trommelmotoren kommen Antriebseinheiten zum Einsatz, die häufig gesonderte Kühlungsmaßnahmen wie beispielsweise eine Ölfüllung des Innenraums des Trommelrohrs zur Ableitung der thermischen Belastung des Antriebs über das Trommelrohr erforderlich machen. Ein Trommelmotor ist in der Regel durch ein Förderband umschlungen, welches regelmäßig eine hohe Bandspannung aufweist, um die Kräfte von der Außenfläche des Trommelrohrs kraftschlüssig übertragen zu können. In bestimmten Anwendungen kommen auch Förderbänder mit formschlüssiger Verrieglung zum Trommelrohr, beispielsweise durch Verzahnung, zum Einsatz, um hohe Förderkräfte zwischen dem Trommelrohr und dem Förderband zu übertragen.

Auf solche Trommelmotoren wirken im Einsatz hohe Kräfte ein, welche einerseits durch die Antriebsleistung, andererseits durch die Bandspannung und die Gewichtskraft eines auf dem Trommelmotor aufliegenden Produkts erzeugt werden. Trommelmotoren werden dabei häufig in anspruchsvollen Umgebungen eingesetzt, welche beispielsweise staubbelastet sein können. In Anwendungsfällen, bei denen Trommelmotoren unter Reinraumbedingungen oder in der pharmazeutischen oder lebensmittelverarbeitenden Industrie eingesetzt werden, kommt zudem eine Belastung durch Reinigungsvorgänge hinzu, verbunden mit der Anforderung, dass der Trommelmotor eine gute Reinigbarkeit mit geringen Gefahren einer Keimbildung in Spalten, Nischen oder dergleichen aufweisen muss. Insbesondere durch die unter der hohen Belastung auftretenden Verformungen ist diese Anforderung, verbunden mit der erforderlichen Dichtigkeit gegenüber eintretenden Flüssigkeiten, beispielsweise bei einer Reinigung mit einem Hochdruck-Reinigungsstrahl, nur mit sehr aufwendigen Maßnahmen zu begegnen.

Als besondere Problemstelle hat sich hierbei die Schnittstelle zwischen den stirnseitigen Deckeln und dem Trommelrohr einerseits und die Schnittstelle zwischen der Achse bzw. den Achsabschnitten im Bereich des Durchtritts aus dem Trommelrohrinnenraum nach außen andererseits gezeigt. Die Erfinder haben festgestellt, dass bekannte Lösungen, bei denen die Achse einen mit dem Trommelrohr mitdrehenden und fest mit dem Trommelrohr abgedichtet verbundenen Deckel aus Kunststoff oder Metall durchdringt, nur bei massiver Ausführung zuverlässig eine Abdichtung gegenüber unter Hochdruck einwirkenden Flüssigkeiten erreichen kann, was für die bei Einsatz in hygienisch anspruchsvollen Umgebungen notwendigen Materialien aus Kostengründen einen großen Nachteil darstellt.

Der Erfindung liegt die Aufgabe zugrunde, eine motorbetriebene Förderrolle, insbesondere einen Trommelmotor, bereitzustellen, bei der in wirtschaftlich effizienter Weise eine zuverlässige und dauerhafte Abdichtung des Innenraums der Förderrolle gegenüber der Umgebung auch unter hohen mechanischen Beanspruchungen gewährleistet ist.

Diese Aufgabe wird erfindungsgemäß gelöst mit einem Deckel zum axial endseitigen Verschluss eines Rollenkörpers einer motorbetriebenen Förderrolle gemäß Anspruch 1, mit einer motorbetriebenen Förderrolle gemäß Anspruch 7 und einem Verfahren zum Herstellen eines Deckels einer motorbetriebenen Förderrolle gemäß Anspruch 11.

Erfindungsgemäß ist für die Förderrolle ein Deckel vorgesehen, der aus zwei unterschiedlichen Materialien hergestellt ist. Die Außenseite des stirnseitigen Deckels ist aus 4 Edelstahl hergestellt und kann bevorzugt dünnwandig ausgeführt sein, beispielsweise aus einem Edelstahlblech ausgeformt sein und eine Wandstärke von weniger als einem mm, insbesondere weniger als 0,5 mm aufweisen. Diese Edelstahl-Außenseite ist mit einer Leichtmetall-Innenseite verbunden, die aus einem Leichtmetall besteht. Die Leichtmetall-Innenwand des Deckels kann dickwandig und gegebenenfalls mit Vesteifungsrippen oder dergleichen ausgeführt sein und stellt die Strukturbelastbarkeit des Deckels bereit. Die Verbindung zwischen der Edelstahl-Außenwand und der Leichtmetall-Innenwand des Deckels wird durch Angießen des Leichtmetalls an den Edelstahl erzielt und folglich durch stoff-schlüssige, adhäsive Verbindung bereitgestellt. Grundsätzlich kann diese Verbindungsweise durch zusätzliche kraft- oder formschlüssige Verbindungswirkungen verstärkt werden. Der erfindungsgemäß ausgeführte Werkstoffverbund-Deckel weist einerseits eine für hygienische Anforderungen vorteilhafte Außenseite aus Edelstahl auf, die qualitativ hohe Eigenschaften für hygienische Anforderungen bereitstellt und eine gute Reinigbarkeit aufweist. Diese Außenseite wird strukturell gestützt durch die aus Leichtmetall geformte, angegossene Innenseite, die eine belastbare Verbindung zur Außenseite aufweist, eine aufgrund der Anbindung hohe mechanische Belastbarkeit des Deckels bereitstellt und aufgrund ihrer präzisen und effizienten spanenden Bearbeitbarkeit es ermöglicht, den Deckel mit hoher Passgenauigkeit im Bereich des Achsdurchtritts und im Bereich der Trommelrohranbindung herzustellen. Diese Kombination stellt eine effiziente Fertigung mit kleinen Toleranzen und hoher Passgenauigkeit sicher, ohne dass hierfür Einbußen bei der hygienischen Anforderung auftreten.

Gemäß einer ersten bevorzugten Ausführungsform ist vorgesehen, dass zwischen der Innenwand und der Außenwand eine durch den Angießprozess erzeugte stoffschlüssige Verbindung ausgebildet ist. Bei der solcher Art ausgebildeten Verbindung wird die mechanische Kraftübertragung zwischen der Außenwand und der Innenwand durch atomare oder molekulare Kräfte bewirkt, die bei dem Angußvorgang der Innenwand an die Außenwand herbeigeführt werden. Diese stoffflüssige Verbindung ist besonders bevorzugt ohne Einsatz eines Klebstoffs zwischen der Innenwand und der Außenwand ausgeführt und macht sich insbesondere die Haftung, die durch den Angießvorgang mit erhöhter Temperatur des Leichtmetalls erzielt wird, zunutze.

Noch weiter ist es bevorzugt, wenn die Außenwand einen zur Innenwand weisenden Hinterschnitt aufweist, der durch das Leichtmetall der Innenwand ausgefüllt ist zur Erzeugung einer formschlüssigen Verbindung zwischen der Innenwand und der Außenwand. Gemäß dieser Ausführungsform wird die mechanische Kraftübertragung zwischen Innen- und Außenwand alternativ oder zusätzlich zu einer stoff- oder kraftschlüssigen Verbindung durch eine formschlüssige Verbindung erzielt. Hierzu ist an der Außenwand auf der Seite der Innenwand ein Hinterschnitt vorgesehen, der durch das Leichtmetall der Innenwand ausgefüllt ist. Der Hinterschnitt kann durch einen entsprechend geformten Vorsprung der Außenwand in Richtung der Innenwand oder durch eine entsprechend ausgeformte Vertiefung der Außenwand auf der zur Innenwand weisenden Seite ausgeführt sein. Vorzugsweise wird der Hinterschnitt bei dem Angußvorgang der Innenwand mit dem Leichtmetall ausgefüllt. Unter einem Hinterschnitt ist hierbei eine geometrische Kontur zu verstehen, die eine Umklammerung bewirkt, also eine formschlüssige Verriegelung, die ein Trennen des Innendeckels vom Außendeckel folglich nur unter Bruch des Außendeckelmaterials oder des Innendeckelmaterials ermöglicht.

Dabei ist es besonders bevorzugt, wenn, der Hinterschnitt durch einen im Längsschnitt L-förmiges Abschnitt des Außendeckels gebildet wird, dessen erster Schenkel sich ausgehend von der Außenwand in axialer Richtung in Bezug auf die Rotationslängsachse in Richtung des Innendeckels erstreckt und dessen zweiter Schenkel sich in Bezug auf die Rotationslängsachse radial erstreckt. Gemäß dieser Ausführungsform wird der Hinterschnitt an einem im Querschnitt L-förmigen Profilabschnitt ausgebildet, der als Vorsprung oder als Vertiefung am Außendeckel ausgeformt ist. Das Leichtmetall füllt bei dieser Ausgestaltung den von den beiden Schenkeln der L-förmigen Kontur umfassten Innenraum aus und erzeugt hierdurch die formschlüssige Verbindung. Grundsätzlich ist es bevorzugt, dass sich die im Querschnitt L-förmige Kontur mit einem Schenkel in einer im Wesentlichen axialen Richtung und mit dem zweiten Schenkel in einer im Wesentlichen radialen Richtung erstreckt, wobei es auf eine exakte axiale bzw. radiale Ausrichtung für die Wirkung der Erfindung nicht ankommt, sondern wesentlich ist, dass der erste Schenkel eine Ausrichtung mit einer axialen Richtungskomponente und der zweite Schenkel eine Ausrichtung mit einer radialen Richtungskomponente aufweist. Dies ermöglicht einem effizienten und freien Einschluss ausgeführten Angußvorgang mit einer sicheren formschlüssigen Verbindung.

Bevorzugt ist es dabei, wenn sich der zweite Schenkel mit der radialen Richtungskomponente ausgehend von dem ersten Schenkel nach radial auswärts erstreckt. Durch diese Ausgestaltung wird der von dem Leichtmetall auszufüllende Hohlraum radial auswärts von dem ersten Schenkel ausgebildet. Dies erzielt eine besonders zuverlässige und feste formschlüssige Verriegelung der Innenwand an der Außenwand, da bei dieser Ausgestaltung die bei Erkaltung des Leichtmetalls im Zuge des Angußprozesses auftretende Schrumpfung eine spezifische Verklammerung der Innenwand an der Außenwand im Bereich des Hinterschnitts bewirkt, die insbesondere dann, wenn der Hinterschnitt als ringförmig umlaufender Hinterschnitt ausgebildet ist, eine gegenüber allen auftretenden Belastungsrichtungen zuverlässige formschlüssige Verbindung zwischen Innenwand und Außenwand bewirkt.

Weiterhin ist es bevorzugt, dass der Hinterschnitt durch einen umlaufenden Ringraum gebildet wird. Durch die Ausgestaltung des Hinterschnitts als umlaufenden Ringraum wird eine allseitige formschlüssige Verriegelung zwischen Innenwand und Außenwand erzielt, die gegenüber den im Betrieb des Trommelmotors auftretenden Belastungen eine zuverlässige Verbindung zwischen Innenwand und Außenwand erzielt. Hierbei ist es zu verstehen, dass der Ringraum in Bezug auf die Rotationslängsachse der Förderrolle umläuft.

Noch weiter ist es bevorzugt, dass die Außenwand durch einen Prägevorgang aus einem Plattenmaterial ausgeformt ist. Durch das Prägen kann die Außenwand aus einem Plattenmaterial, beispielsweise einem kreisrund zugeschnittenem blechförmigen Abschnitt ausgeformt werden und hierbei geeignete Konturen wie beispielsweise sich radial erstreckende Verstärkungsrippen, umlaufende Verstärkungsrippen, ausgeformt werden, die einerseits die mechanische Kraftübertragung zwischen Außenwand und Innenwand durch Formschlusseffekte und infolge der beim Gießprozess auftretenden Schrumpfung erzielte Kraftschlusseffekte verbessern, andererseits die Außenwand hinsichtlich ihrer Kontur solcher Art versteifen, dass auch während des Angußvorgangs kein Verzug auftritt.

Noch weiter ist es bevorzugt, dass die Innenwand durch einen Spritzgussvorgang an die Außenwand angespritzt ist. Ein Spritzgussvorgang ermöglicht das Angießen des Leichtmetalls in schmelzflüssigem Zustand unter hohem Druck und hierdurch eine effiziente Fertigung des erfindungsgemäßen Deckels in großer Stückzahl, mit geringem Ausschuss und guter Anbindung zwischen Innen- und Außenwand. Der Spritzgussvorgang wird dabei bevorzugt solcher Art ausführt, dass die Außenwand vorgefertigt ist und in einer entsprechend ausgebildeten Spritzgussform eingelegt wird, die hier nach geschlossen wird, dabei einen Hohlraum ausbildet der den Raum für die Innenwand darstellt, um dann das Leichtmetall unter Überdruck in schmelzflüssigem Zustand in diesem Hohlraum und folglich an die Außenwand anzuspritzen.

Noch weiter ist es bevorzugt, wenn die Innenwand einen zur Antriebseinheit weisenden Vorsprung aufweist und die Antriebseinheit formschlüssig an dem Vorsprung gegen eine Rotation der Antriebseinheit um die Rotationslängsachse relativ zu dem Deckel abgestützt ist. Ein solcher Vorsprung oder eine solche Mehrzahl von Vorsprüngen dient insbesondere dazu, die Antriebseinheit drehmomentfest an dem Deckel und damit an dem Rollenkörper zu befestigen, um eine Übertragung von Antriebskräften von der Antriebseinheit auf den Rollenkörper zu ermöglichen. Grundsätzlich ist eine drehmomentfeste Verbindung des Deckels mit dem Rollenkörper bevorzugt, um zwischen Deckel und Rollenkörper eine zuverlässige Abdichtung über diese Schnittstelle mit großem Durchmesser zu erzielen, wohingegen eine drehbare und ebenfalls abgedichtete Lagerung im Bereich zwischen Deckel und Achse bzw. Achsstummel vorgesehen sein kann. Die Antriebseinheit erzeugt in diesem Fall ein Drehmoment zwischen Rollenkörper und Achsstummel, welches über einen oder eine entsprechende Mehrzahl von Vorsprüngen an Deckel auf den Rollenkörper übertragen werden kann. Besonders bevorzugt ist es hierbei, dass der bzw. die Vorsprünge aus Leichtmetall ausgebildet sind und folglich in effizienter Weise einer spanenden Bearbeitung unterzogen werden können, um eine gute Passgenauigkeit für die Kraftübertragung von der Antriebseinheit auf den Deckel zu erzielen. Insofern ist es besonders bevorzugt, wenn der Vorsprung bzw. wenn die Mehrzahl der Vorsprünge durch mechanische, insbesondere spanende Bearbeitung hergestellte Vorsprungsflächen aufweisen.

Noch weiter ist es bevorzugt, wenn der Deckel eine Innenumfangsfläche und eine Außenumfangsfläche aufweist, die koaxial in Bezug auf die Rotationslängsachse liegen. Eine solche Innenumfangsfläche und Außenumfangsfläche, die solcher Art verstanden werden, dass sie exakt nach radial auswärts bzw. radial einwärts ausgerichtete Flächennormale haben können, ebenso gut aber auch eine Flächennormale, die eine nach axial auswärts bzw. axial einwärts ausgerichtete Richtungskomponente aufweist und folglich eine schräg radial-axiale Ausrichtung haben, können vorteilhaft dazu eingesetzt werden, um den Deckel am Rollenkörper zu befestigen und um durch eine zentrale Öffnung in dem Deckel einen Achsstummel hindurchzuführen und eine Lagerung für diesen Achstummel in Bezug auf den Deckel anzuordnen. Insbesondere kann die Innenumfangsfläche dazu ausgebildet sein, um Wälzlager zur Lagerung des Achsstummels an den Deckel aufzunehmen und um gegebenenfalls zusätzlich ein oder mehrere Dichtungselemente aufzunehmen, beispielsweise um einen Radialwellendichtring und einen axial auswärts von diesem Radialwellendichtring gegebenenfalls zusätzlich vorgesehenen, im Querschnitt L-förmigen Dichtring am Deckel zu befestigen.

Dabei ist es besonders bevorzugt, wenn die Innenumfangsfläche als Lagersitz ausgebildet und spanend hergestellt und/oder dass die Außenumfangsfläche als Dichtungsfläche ausgebildet und spanend hergestellt ist. Die spanende Ausgestaltung der Innenumfangsfläche und/ oder der Außenumfangsfläche ist bei dem erfindungsgemäßen Deckel in besonders effizienter Weise ausführbar, da hierbei eine Zerspanung von Leichtmetall durchgeführt wird. Diese Zerspanung hat gegenüber der beispielsweise im Stand der Technik oftmals notwendigen Zerspanung von Edelstahl, Stahl oder Kunststoff den Vorteil, dass eine wirksame und schnelle Zerspanung des Leichtmetalls möglich ist, zugleich aber eine belastbare und mit hoher geometrischer Präzision und Toleranz ausgebildete Oberfläche dabei hergestellt werden kann.

Ein weiterer Aspekt der Erfindung ist ein Deckel zum axial endseitigen Verschluss eines Rollenkörpers einer motorbetriebenen Förderrolle, insbesondere eines Trommelmotors, bei dem der Deckel eine aus rostfreiem Stahl ausgebildete Außenwand und eine an die Außenwand angegossene, aus einem Leichtmetall ausgebildete Innenwand aufweist. Der Deckel gemäß dieses Aspekts der Erfindung weist alle Merkmale des Deckels der zuvor erläuterten Förderrolle auf und es ist zu verstehen, dass der Deckel insbesondere mit den zuvor erläuterten Merkmalen des Deckels der motorbetriebenen Förderrolle fortgebildet werden kann und hierdurch die in dem Zusammenhang mit diesen Merkmalen beschriebenen Vorteile erzielt.

Schließlich ist ein weiterer Aspekt der Erfindung ein Verfahren zum Herstellen eines Deckels einer motorbetriebene Förderrolle, insbesondere eines Trommelmotors, mit den Schritten: a) Ausformen einer Deckelaußenwand aus einem rostfreien Stahl, b) Anformen einer Deckelinnenwand aus einem Leichtmetall an die Deckelaußenwand, c) Verbinden der Deckelaußenwand mit der Deckelinnenwand im Schritt b). Mit diesem Verfahren kann insbesondere ein Deckel für eine motorbetriebene Förderrolle der zuvor beschriebenen Bauart oder ein Deckel der zuvor beschriebenen Bauart hergestellt werden. Es ist zu verstehen, dass das Herstellverfahren dabei insbesondere solcherart ausgeführt sein kann, dass es die zuvor beschriebenen Merkmale des Deckels der erfindungsgemäßen Förderrolle aufweist.

Das Verfahren kann insbesondere fortgebildet werden, indem die Deckelinnenwand durch einen Anspritzprozess aus einem fließfähigen Leichtmetall angeformt wird. Ein solcher Umformprozess kann beispielsweise durch Prägung, Tiefziehen ausgeführt werden und erzielt hierbei die zuvor in Bezug auf den Prägeprozess der Außenwand des Deckels der erfindungsgemäßen Förderrolle beschriebenen Vorteile und ermöglicht die dort beschriebenen Varianten.

Noch weiter ist es bevorzugt, dass die Deckelinnenwand durch einen Anspritzprozess aus einem fließfähigen Leichtmetall angeformt wird. Der Anspritzprozess kann insbesondere durch einen Spritzgießvorgang eines schmelzflüssigen Materials in einer Spritzgussform mit Überdruck des schmelzförmigen Leichtmetalls ausgeführt werden und erzielt hierbei die Vorteile, die in Bezug auf den Spritzgussvorgang des Leichtmetalls für den Deckel der zuvor beschriebenen erfindungsgemäßen Förderrolle beschrieben wurden und kann die damit zusammenhängenden Varianten verwirklichen.

Noch weiter ist es bevorzugt, wenn die Deckelinnenwand in Schritt b) mittels einer formschlüssigen Verbindung und/oder mittels einer stoffschlüssigen Verbindung mit der Deckelaußenwand verbunden wird. Die stoffschlüssige Verbindung kann hierbei insbesondere ohne einen dabei verwendeten Klebstoff zwischen dem Material der Innenwand und dem Material der Außenwand ausgeführt sein, also insbesondere durch die in Folge des schmelzflüssigen Angießens des Leichtmetalls erzeugten atomaren und molekularen Kräfte wirken. Die formschlüssige Verbindung kann insbesondere durch Umgießen eines Hinterschnitts in einer Vertiefung oder an einem Vorsprung des Außendeckels ausgebildet sein. Insbesondere kann die formschlüssige Verbindung solcherart ausgeführt sein, dass die Verriegelung der formschlüssig zusammenwirkenden Abschnitte von Innenwand und Außenwand durch den Schrumpfungsprozess des Leichtmetalls während des Angießvorgangs bzw. Anspritzvorgangs des Leichtmetalls an die Außenwand verstärkt wird, beispielsweise indem die formschlüssige Verriegelung durch eine mit Leichtmetall ausgefüllte Ausnehmung hergestellt wird, die nach radial auswärts weist und die an zumindest einander in Bezug auf eine Rotationssymmetrieachse des Deckels gegenüberliegend zueinander angeordnete Hinterschnitte ausgebildet sind, vorzugsweise durch einen ringförmig um eine solche Rotationssymmetrieachse des Deckels umlaufende Hinterschneidung ausgebildet ist, die nach radial auswärts offen ist bzw. weist.

Schließlich ist es noch weiter bevorzugt, wenn an der Deckelinnenwand und/oder an der Deckelaußenwand nach dem Schritt c) in einem spanenden Bearbeitungsprozess ein Lagersitz und/oder ein Dichtungssitz ausgebildet wird. Die spanende Bearbeitung kann dabei bevorzugt an dem Leichtmetall ausgeführt werden, insbesondere nur an dem Leichtmetall ausgeführt werden, was eine besonders effiziente und präzise Fertigung der Lagersitze mit hoher Toleranzgüte ermöglicht.

Bevorzugte Ausführungsformen der Erfindung werden anhand der beiliegenden Figuren beschrieben. Es zeigen:
- Figur 1:: eine bevorzugte Ausführungsform einer erfindungsgemäßen motorbetriebenen Förderrolle,
- Figur 2:: eine Frontalansicht auf die Innenseite eines Deckels der erfindungsgemäβen Förderrolle,
- Figur 3:: entlang der Linie A-A in Figur 2 geschnittenen Längsansicht des Deckels gemäß Figur 2
- Figur 4:: entlang der Linie B-B in Figur 2 geschnittenen Längsansicht des Deckels gemäß Figur 2 und Figur 3 in einer Teilansicht

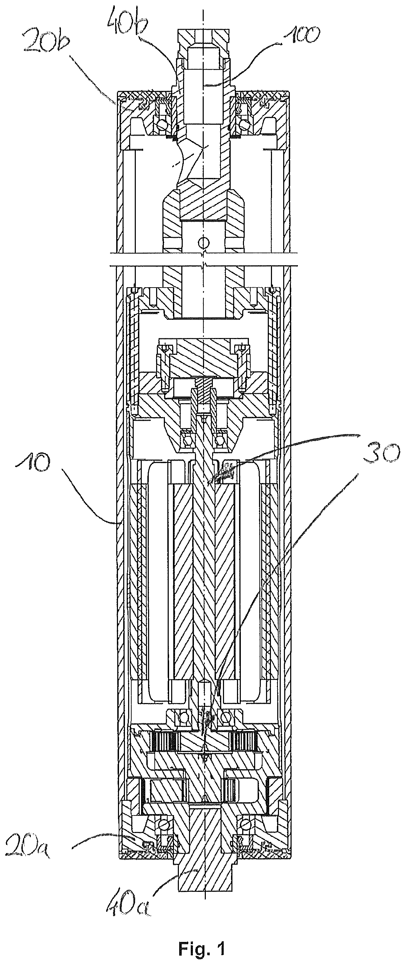

Bezugnehmend zunächst auf Figur 1 ist ein Trommelmotor grundsätzlich aus einem Trommelrohr 10 aufgebaut, in welches an beiden Stirnseiten jeweils ein Deckel 20a, 20b eingesetzt sind, die vorzugsweise baugleich sind. Die Deckel 20a, b, sind drehmomentfest mit dem Trommelrohr 10 verbunden, indem eine reibschlüssige Presspassung am Außenumfang des Deckels zum Umfang des Trommelrohrs hergestellt ist. Anstelle der reibschlüssigen Anbindung kann auch eine Drehmoment-Übertragung durch Formschluss, Stoffschluss oder Mischformen hieraus realisiert sein.

Im Innenraum des Trommelrohrs 10 ist eine Antriebseinheit 30 angeordnet, die aus einem Elektromotor und einem Getriebe aufgebaut ist. Die Antriebseinheit 30 erzeugt ein Drehmoment und eine Rotationsbewegung zwischen dem Trommelrohr 10 und zwei Achsstummel 40 a, b, die mittels Wälzlagern in den Deckeln 20 a, b gelagert sind. Die Achsstummel 40 a, b, stehen stirnseitig aus dem jeweiligen Deckel 20a, b heraus und können folglich in einem Gestell, das den Trommelmotor aufnimmt befestigt werden. Die Antriebseinheit 30 ist an den Achsstummeln 40 a, b, drehmomentfest abgestützt und überträgt das zur Rotation dienende Drehmoment über den linksseitigen Deckel 20a auf das Trommelrohr 10.

Im Gebrauch ist der im Figur 1 abgebildeter Trommelmotor 10 typischerweise mit einer horizontal liegenden Rotationslängsachse 100 in Benutzung und kann im Innenraum gegebenenfalls eine Ölfüllung zur thermischen Ableitung von Wärme aus der Antriebseinheit 30 an die Umgebung über das Trommelrohr 10 enthalten.

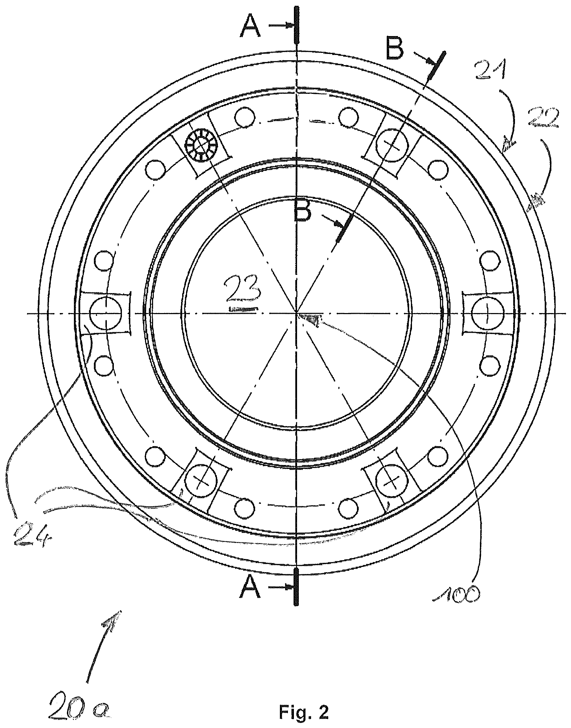

Figur 2 zeigt eine Innenansicht des Deckels 20a bzw. 20b. Wie erkennbar ist, weist der Deckel eine erste umlaufende Umfangsfläche 21 und eine demgegenüber im Durchmesser leicht reduzierte zweite umlaufende Umfangsfläche 22 auf. Die erste Umfangsfläche 21 hat einen Durchmesser, der dem Durchmesser des Trommelrohrs 10 entspricht und verdeckt folglich stirnseitig das Trommelrohr 10. Die zweite Umfangsfläche 22 dient zur Befestigung des Deckels in dem Trommelrohr 10 und ist solcher Art bemessen, dass sie eine kraftschlüssige Pressverbindung zum Innenumfang des Trommelrohrs 10 ausbildet.

Eine zentrale Öffnung 23, die koaxial um die Rotationslängsachse 100 angeordnet ist, dient der Durchführung des Achsstummes 40a bzw. 40b. Der Deckel 20a, b weist weiterhin insgesamt sechs in axialer Richtung zur Innenseite vorstehende Vorsprünge 24 auf, die zu formschlüssigen Drehmoment Verbindung mit der Abtriebswelle des Getriebes der Antriebseinheit 30 dienen.

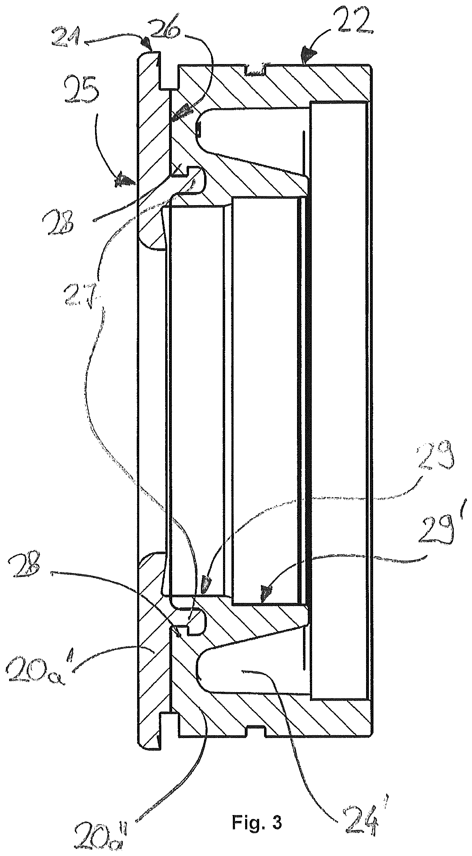

Wie in den Längsschnitten gemäß Figur 2 und 3 erkennbar, ist der Deckel 20a aus einer Außenwand 20a` und einer Innenwand" ausgebildet. Die Außenwand 20a` ist aus Edelstahl ausgebildet, also einem rostfreien und gegenüber der Einwirkung vieler chemischer Substanzen unempfindlichem Material. Die Außenwand 20a' kann durch Prägen oder Gießen, Tiefziehen oder durch eine spanende mechanische Bearbeitung hergestellt sein.

Die Innenwand 20a" ist aus einem Leichtmetall, insbesondere aus Aluminium hergestellt. Die Innenwand 20a" ist durch Angießen an die Außenwand 20a` mit dieser verbunden und in ihrer geometrischen Grundstruktur geformt. Sowohl die Außenwand 20a' als auch die Innenwand 20a" können durch mechanische Nachbearbeitung nach der Verbindung der Innenwand und der Außenwand an verschiedenen Flächen noch bearbeitet werden, um bestimmte Maße und geometrischen Strukturen herzustellen.

Die Außenwand 20a' ist im Wesentlichen ringförmig ausgebildet und deckt den gesamten, zur Umgebung weisenden Abschnitt des Deckels 20a, b. Die Innenwand 20a" kommt daher nicht in Kontakt mit jeglichen Flüssigkeiten oder Feststoffen, die auf den Trommelmotor von außen einwirken. Die Außenwand 20a' weist hierzu eine plane Stirnfläche 25 auf.

Auf der dieser Stirnfläche 25 gegenüberliegenden, zur Innenwand 20a" weisenden Seite der Außenwand 20a' ist diese ebenfalls mit einer planen Kontaktfläche 26 ausgebildet. Aus dieser planen Kontaktfläche 26 steht ein ringförmiger Vorsprung 27 hervor, der umlaufend um die Rotationachse 100 ist und sich in axialer Richtung zur Innenwand 20a" erstreckt. Dieser ringförmige Vorsprung ist im Querschnitt L-förmig, wobei sich der erste Schenkel ausgehend von der nach innen weisenden Fläche 26 der Außenwand in axialer Richtung zur Innenwand 20a - erstreckt und der zweite Schenkel ausgehend vom Ende des ersten Schenkels sich nach radial auswärts erstreckt. Der Vorsprung 27 bildet hierdurch einen Hinterschnitt aus, der durch das Material des Innendeckels im Bereich 28 ausgefüllt ist. Durch diesen Hinterschnitt mit Ausfüllung durch das Material des Innendeckels wird eine formschlüssige Verriegelung zwischen der Innenwand und der Außenwand erzielt. Aufgrund des Angießens der Innenwand an die Außenwand und der hierbei auftretenden Schrumpfung ist diese formschlüssige Verriegelung geringfügig verspannt und somit besonders sicher, da der ausgefüllte Hinterschnitt nach radial auswärts zeigt und hierdurch eine Zugverspannung des Materials der Innenwand in Umfangsrichtung durch die Schrumpfung hervorruft, welches eine verspannte Verriegelung der Innenwand an dem Vorsprung der Außenwand bewirkt.

Die aus Leichtmetall hergestellte Innenwand weist die Außenumfangsfläche 22 auf, die durch spanende Bearbeitung des Leichtmetalls auf das erwünschte, mit einer Toleranz versehene Maß bearbeitet ist, um die Presspassung zur Innenumfangsfläche des Trommelrohrs 10 zu erreichen. In der Außenumfangsfläche 22 ist weiterhin eine Nut in Umfangsrichtung eingebracht, die zur Aufnahme eines Dichtungsrings dienen kann, um eine zuverlässige Abdichtung zwischen dem Deckel 20a und dem Trommelrohr 10 zu erreichen.

Die im Durchmesser der Außenumfangsfläche 22 des Trommelrohrs 10 liegende Umfangsfläche 22 des Deckels ist von der Umfangsfläche 22 durch eine wiederum umlaufende Ringnut getrennt.

Im Bereich der Ausnehmung 23 sind an der Innenwand weiterhin spanend bearbeitete Innenumfangsflächen 29, 29' vorhanden, welche zur Aufnahme eines Radialwellendichtrings im Bereich der Umfangsfläche 29 und eines Wälzlagers im Bereich der Umfangsfläche 29` dienen. Durch die spanende Bearbeitung kann hier in effizienter Fertigungsweise ein exakter Sitz des Radialwellendichtrings und des Wälzlagers im Deckel erzielt werden.

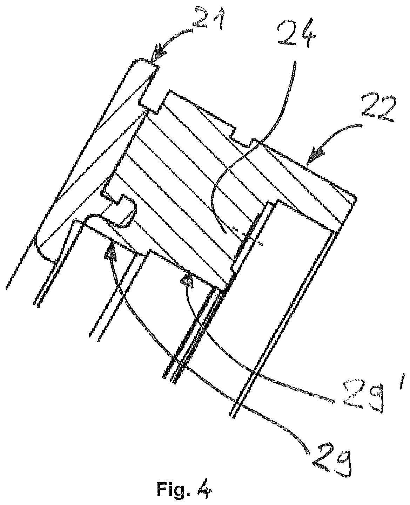

Aus Figur 4 ist ein Längsschnitt durch den Deckel im Bereich eines Vorsprungs 24 erkennbar. Axial innenliegend sind an dem Vorsprung 24 rotationssymmetrische Zentrierungsbohrungen als Vertiefung ausgeformt und, die zur exakten Positionierung und Artierung der Getriebeausgangswelle dienen. Figur 3 zeigt einen Längsschnitt zwischen diesen Vorsprüngen, aus dem die hier vorhandene Ausnehmung 24' zwischen den jeweiligen Vorsprüngen 24 erkennbar ist.

Im Herstellungsprozess des in den Figuren gezeigten Deckels wird zunächst die Außenwand 20a' durch spanende Bearbeitung aus Vollmaterial, durch Gießen oder durch einen Prägevorgang aus einem Platenmaterial hergestellt und hierbei auch der Vorsprung 27 ausgebildet. Die Außenwand 20a' wird dann in eine Spritzgußform eingelegt und darin fixiert. Diese Spritzgußform formt zugleich einen Hohlraum aus, welcher der Kontur der Innenwand 20a" entspricht und das Leichtmetall, welches die Innenwand ausbildet, wird im schmelzflüssigen Zustand unter einem Überdruck in diesen Hohlraum eingespritzt. Bei diesem Einspritzvorgang findet eine stoffschlüssige Anbindung der Innenwand an die Außenwand statt. Nach Erstarrung des Leichtmetalls kann der Deckel aus der Spritzgußform entnommen werden und durch spanende Nachbearbeitung die besagten Flächen 22, 29, 29`, die Zentrierbohrungen in den Vorsprüngen 24 und die Ringnut für den Dichtungsring in der Umfangsfläche 22 hergestellt werden.

## Patentansprüche

1. Deckel zum axial endseitigen Verschluss eines Rollenkörpers einer motorbetriebenen Förderrolle, insbesondere eines Trommelmotors,
**dadurch gekennzeichnet, dass** der Deckel eine aus rostfreiem Stahl ausgebildete Außenwand und eine an die Außenwand angegossene, aus einem Leichtmetall ausgebildete Innenwand aufweist.

2. Deckel nach Anspruch 1,
**dadurch gekennzeichnet, dass** zwischen der Innenwand und der Außenwand eine durch den Angießprozess erzeugte stoffschlüssige Verbindung ausgebildet ist.

3. Deckel nach Anspruch 1 oder 2,
**dadurch gekennzeichnet, dass** die Außenwand einen zur Innenwand weisenden Hinterschnitt aufweist, der durch das Leichtmetall der Innenwand ausgefüllt ist zur Erzeugung einer formschlüssigen Verbindung zwischen der Innenwand und der Außenwand.

4. Deckel nach Anspruch 3,
**dadurch gekennzeichnet, dass** der Hinterschnitt durch einen umlaufenden Ringraum gebildet wird.

5. Deckel nach einem der vorhergehenden Ansprüche,
**dadurch gekennzeichnet, dass** die Außenwand durch einen Prägevorgang aus einem Plattenmaterial ausgeformt ist.

6. Deckel nach einem der vorhergehenden Ansprüche,
**dadurch gekennzeichnet, dass** die Innenwand durch einen Spritzgussvorgang an die Außenwand angespritzt ist.

7. Motorbetriebene Förderrolle, insbesondere Trommelmotor, umfassend:
- einen sich entlang einer Rotationslängsachse erstreckenden zylindrischen Rollenkörper,
- eine koaxial in Bezug auf die Rotationslängsachse zum Rollenkörper ausgerichtete Achseinheit,
- eine in dem Rollenkörper angeordnete Antriebseinheit, die mit dem Rollenkörper und der Achseinheit gekoppelt ist zu Erzeugung einer Rotationsbewegung zwischen der Achseinheit und dem Rollenkörper um die Rotationslängsachse,
- einen ersten endseitigen Deckel, welcher den Rollenkörper an einem ersten axialen Ende verschließt und durch den sich ein Achsabschnitt der Achseinheit erstreckt,
**dadurch gekennzeichnet, dass** die Förderrolle einen Deckel gemäß einem der vorhergehenden Ansprüche aufweist.

8. Förderrolle nach Anspruch 7 mit einem Deckel nach Anspruch 3 oder 4,
**dadurch gekennzeichnet, dass** der Hinterschnitt durch einen im Längsschnitt L-förmiges Abschnitt des Außendeckels gebildet wird, dessen erster Schenkel sich ausgehend von der Außenwand in axialer Richtung in Bezug auf die Rotationslängsachse in Richtung des Innendeckels erstreckt und dessen zweiter Schenkel sich in Bezug auf die Rotationslängsachse radial erstreckt.

9. Förderrolle nach einem der vorhergehenden Ansprüche 7 oder 8,
**dadurch gekennzeichnet, dass** die Innenwand einen zur Antriebseinheit weisenden Vorsprung aufweist und die Antriebseinheit formschlüssig an dem Vorsprung gegen eine Rotation der Antriebseinheit um die Rotationslängsachse relativ zu dem Deckel abgestützt ist.

10. Förderrolle nach einem der vorhergehenden Ansprüche 7-9,
**dadurch gekennzeichnet, dass** der Deckel eine Innenumfangsfläche und eine Au-βenumfangsfläche aufweist, die koaxial in Bezug auf die Rotationslängsachse liegen.
wobei vorzugsweise die Innenumfangsfläche als Lagersitz ausgebildet und spanend hergestellt und/oder dass die Außenumfangsfläche als Dichtungsfläche ausgebildet und spanend hergestellt ist.

11. Verfahren zum Herstellen eines Deckels einer motorbetriebenen Förderrolle, insbesondere eines Trommelmotors, mit den Schritten:
a) Ausformen einer Deckelaußenwand aus einem rostfreien Stahl,
b) Anformen einer Deckelinnenwand aus einem Leichtmetall an die Deckelaußenwand,
c) Verbinden der Deckelaußenwand mit der Deckelinnenwand im Schritt b),
**dadurch gekennzeichnet, dass**
die Deckelinnenwand an die Deckelaußenwand angegossen wird.

12. Verfahren nach Anspruch 11,
**dadurch gekennzeichnet, dass** die Deckelaußenwand durch einen Umformprozess aus einem Plattenmaterial ausgeformt wird.

13. Verfahren nach Anspruch 11 oder 12,
**dadurch gekennzeichnet, dass** die Deckelinnenwand durch einen Anspritzprozess aus einem fließfähigen Leichtmetall angeformt wird.

14. Verfahren nach einem der Ansprüche 11 bis 13,
**dadurch gekennzeichnet, dass** die Deckelinnenwand in Schritt b) mittels einer formschlüssigen Verbindung und/oder mittels einer stoffschlüssigen Verbindung mit der Deckelaußenwand verbunden wird.

15. Verfahren nach einem der Ansprüche 11 bis 14,
**dadurch gekennzeichnet, dass** an der Deckelinnenwand und/oder an der Deckelaußenwand nach dem Schritt c) in einem spanenden Bearbeitungsprozess ein Lagersitz und/oder ein Dichtungssitz ausgebildet wird.

## Claims

1. Lid for the axial end closure of a roller body of a motor-driven conveyor roller, in particular of a drum motor,
**characterised in that** the lid has an outer wall formed from stainless steel and an inner wall formed from a light metal and cast onto the outer wall.

2. Lid according to claim 1,
**characterised in that** the inner wall and the outer wall form a material bond created by the casting process.

3. Lid according to claim 1 or 2,
**characterised in that** the outer wall has an undercut facing the inner wall, which is filled by the light metal of the inner wall to produce a positive connection between the inner wall and the outer wall.

4. Lid according to claim 3,
**characterised in that** the undercut is formed by a circumferential annular space.

5. Lid according to any of the preceding claims,
**characterised in that** the outer wall is formed from a sheet material by an embossing process.

6. Lid according to any of the preceding claims,
**characterised in that** the inner wall is injection moulded onto the outer wall by an injection moulding process.

7. Motorised conveyor roller, in particular drum motor, comprising:
- a cylindrical roller body extending along a longitudinal axis of rotation,
- an axle unit aligned coaxially to the roller body in relation to the longitudinal axis of rotation,
- a drive unit arranged in the roller body, which is coupled to the roller body and the axle unit to generate a rotational movement between the axle unit and the roller body about the longitudinal axis of rotation,
- a first end lid which closes the roller body at a first axial end and through which an axle section of the axle unit extends,
**characterised in that** the conveyor roller has a lid according to any of the preceding claims.

8. Conveyor roller according to claim 7 with a lid according to claim 3 or 4, **characterised in that** the undercut is formed by an L-shaped section of the outer lid in longitudinal section, the first leg of which extends from the outer wall in the axial direction in relation to the longitudinal axis of rotation in the direction of the inner lid and the second leg of which extends radially in relation to the longitudinal axis of rotation.

9. Conveyor roller according to any of the preceding claims 7 or 8,
**characterised in that** the inner wall has a projection pointing towards the drive unit and the drive unit is positively supported on the projection against rotation of the drive unit about the longitudinal axis of rotation relative to the lid.

10. Conveyor roller according to any of the preceding claims 7-9,
**characterised in that** the lid has an inner circumferential surface and an outer circumferential surface which are coaxial with respect to the longitudinal axis of rotation.
wherein preferably the inner circumferential surface is designed as a bearing seat and is produced by machining and/or that the outer circumferential surface is designed as a sealing surface and is produced by machining.

11. Method of manufacturing a lid of a motor-driven conveyor roller,
in particular of a drum motor, comprising the steps of:
a) Moulding an outer lid wall from stainless steel,
b) Moulding an inner lid wall from a light metal to the outer lid wall,
c) Connect the outer lid wall to the inner lid wall in step b),
**characterised in that**
the inner lid wall is moulded onto the outer lid wall .

12. Method according to claim 11,
**characterised in that** the outer lid wall is formed from a sheet material by a forming process.

13. Method according to claim 11 or 12,
**characterised in that** the inner lid wall is formed from a flowable light metal by a moulding process.

14. Method according to any of claims 11 to 13,
**characterised in that** the inner lid wall is connected to the outer lid wall in step b) by means of a positive-locking connection and/or by means of a material-locking connection.

15. Method according to any of claims 11 to 14,
**characterised in that** a bearing seat and/or a seal seat is formed on the inner lid wall and/or on the outer lid wall after step c) in a machining process.

## Revendications

1. Couvercle pour la fermeture de l'extrémité axiale d'un corps de rouleau d'un rouleau transporteur motorisé, en particulier d'un tambour moteur, **caractérisé en ce que** le couvercle présente une paroi extérieure en acier inoxydable et une paroi intérieure en métal léger et coulée sur la paroi extérieure.

2. Couvercle selon la revendication 1,
**caractérisé en ce qu'**une liaison par conjonction de matière créée par le processus de coulée est formée entre la paroi intérieure et la paroi extérieure.

3. Couvercle selon la revendication 1 ou 2,
**caractérisé en ce que** la paroi extérieure présente une contre-dépouille faisant face à la paroi intérieure, qui est remplie par le métal léger de la paroi intérieure pour créer une liaison par conjonction de matière entre la paroi intérieure et la paroi extérieure.

4. Couvercle selon la revendication 3,
**caractérisé en ce que** la contre-dépouille est formée par un espace annulaire périphérique.

5. Couvercle selon une des revendications précédentes,
**caractérisé en ce que** la paroi extérieure est formée à partir d'un matériau en plaque par un processus de gaufrage.

6. Couvercle selon une des revendications précédentes,
**caractérisé en ce que** la paroi intérieure est moulée sur la paroi extérieure par un procédé de moulage par injection.

7. Rouleau transporteur motorisé, en particulier un tambour moteur, comprenant:
- un corps de rouleau cylindrique s'étendant le long d'un axe de rotation longitudinal,
- une unité d'essieu alignée coaxialement par rapport à l'axe longitudinal de rotation du corps de rouleau,
- une unité d'entraînement disposée dans le corps de rouleau, qui est couplée au corps de rouleau et à l'unité d'essieu pour générer un mouvement de rotation entre l'unité d'essieu et le corps de rouleau autour de l'axe de rotation longitudinal,
- un premier couvercle d'extrémité, qui ferme le corps de rouleau au niveau d'une première extrémité axiale et à travers lequel s'étend une section d'essieu de l'unité d'essieu,
**caractérisé en ce que** le rouleau transporteur présente un couvercle selon une des revendications précédentes.

8. Rouleau transporteur selon la revendication 7 comportant un couvercle selon la revendication 3 ou 4,
**caractérisé en ce que** la contre-dépouille est formée par une section du couvercle extérieur qui est en forme de L en section longitudinale, dont la première branche s'étend depuis la paroi extérieure dans la direction axiale par rapport à l'axe longitudinal de rotation dans la direction du couvercle intérieur et dont la deuxième branche s'étend par rapport à l'axe longitudinal de rotation et s'étend radialement.

9. Rouleau de manutention selon l'une des revendications précédentes 7 ou 8, **caractérisé en ce que** la paroi intérieure présente une saillie orientée vers l'unité d'entraînement et l'unité d'entraînement est soutenue par complémentarité de forme sur la saillie contre une rotation de l'unité d'entraînement autour de l'axe de rotation longitudinal par rapport au couvercle.

10. Rouleau transporteur selon une des revendications précédentes 7 à 9, **caractérisé en ce que** le couvercle présente une surface périphérique intérieure et une surface périphérique extérieure coaxiales par rapport à l'axe de rotation longitudinal, dans lequel de préférence la surface circonférentielle intérieure est conçue comme un siège de roulement et fabriquée par usinage et/ou la surface circonférentielle extérieure est conçue comme une surface d'étanchéité et fabriquée par usinage.

11. Procédé de fabrication d'un couvercle d'un rouleau transporteur motorisé, en particulier un tambour moteur, comportant les étapes consistant à :
a) façonner une paroi de couvercle extérieure en acier inoxydable,
b) mouler une paroi de couvercle intérieure en métal léger sur la paroi de couvercle extérieure,
c) relier la paroi de couvercle extérieure à la paroi de couvercle intérieure en une seule étape b),
**caractérisé en ce que** la paroi de couvercle intérieure est coulée sur la paroi extérieure du couvercle.

12. Procédé selon la revendication 11,
**caractérisé en ce que** la paroi de couvercle extérieure est façonnée à partir d'un matériau en plaque par un processus de façonnage.

13. Procédé selon la revendication 11 ou 12,
**caractérisé en ce que** la paroi de couvercle intérieure est formée à partir d'un métal léger fluide par un processus de moulage.

14. Procédé selon une des revendications 11 à 13,
**caractérisé en ce que** la paroi de couvercle intérieure est reliée à la paroi de couvercle extérieure à l'étape b) au moyen d'une liaison par conjonction de forme et/ou au moyen d'une liaison par conjonction de matière.

15. Procédé selon une des revendications 11 à 14,
**caractérisé en ce qu'**un siège de roulement et/ou un siège d'étanchéité est formé sur la paroi de couvercle intérieure et/ou sur la paroi de couvercle extérieure après l'étape c) dans un processus d'usinage.
